# EUROPEAN PATENT SPECIFICATION

(11) **EP 4 169 368 B1**
(45) Date of publication and mention of the grant of the patent: **21.05.2025**
(21) Application number: 22183092.0
(22) Date of filing: 05.07.2022
(51) Int. Cl.: A01D 41/12, A01D 41/127, A01D 43/08

(54) **SYSTEM FOR DYNAMICALLY DETECTING ALERT CONDITIONS AND OPTIMIZATION CRITERIA**
SYSTEM ZUM DYNAMISCHEN DETEKTIEREN VON ALARMZUSTÄNDEN UND OPTIMIERUNGSKRITERIEN
SYSTÈME POUR DÉTECTER DYNAMIQUEMENT DES CONDITIONS D'ALERTE ET DES CRITÈRES D'OPTIMISATION

(30) Priority: 28.07.2021 US 202117386975
(43) Date of publication of application: 26.04.2023
(73) Proprietor: Deere & Company, Moline, IL 61265 (US)
(72) Inventor: Faust, Jeremy J., Mannheim (DE); O'Connor, Kellen, Mannheim (DE)
(74) Representative: Holst, Sönke

(56) References cited:
- EP-A1- 2 929 773
- US-A1- 2018 022 559
- US-A1- 2020 133 262

## Description

### DESCRIPTION

The present description relates to mobile work machines. More specifically, the present description relates to detecting alert conditions and generating dynamic tutorial output.

### BACKGROUND

There are a wide variety of different types of mobile work machine such as agricultural vehicles and construction vehicles. Some vehicles include harvesters, such as forage harvesters, sugar cane harvesters, combine harvesters, and other harvesters, that harvest grain or other crop. Such harvesters often unload into carts which may be pulled by tractors or semi-trailers as the harvesters are moving. Some construction vehicles include vehicles that remove asphalt or other similar materials. Such machines can include cold planers, asphalt mills, asphalt grinders, etc. Such construction vehicles often unload material into a receiving vehicle, such as a dump truck or other vehicle with a receiving vessel.

As one example, while harvesting in a field using a forage harvester, an operator attempts to control the forage harvester to maintain harvesting efficiency, during many different types of conditions. The soil conditions, crop conditions, and other things can all change. This may result in the operator changing control settings. This means that the operator needs to devote a relatively large amount of attention to controlling the forage harvester.

At the same time, a semi-truck or tractor-pulled cart is often in position relative to the forage harvester (e.g., behind the forage harvester or alongside the forage harvester) so that the forage harvester can fill the truck or cart while moving through the field. In some current systems, this requires the operator of the forage harvester to control the position of the unloading spout and flap so that the truck or cart is filled evenly, but not overfilled. Even a momentary misalignment between the spout and the truck or cart may result in hundreds of pounds of harvested material being dumped on the ground, or elsewhere, rather than in the truck or cart.

The receiving vehicle often has more freedom to move relative to the harvester than the harvester has to slow down or speed up due to crop unloading. Thus, the operators of the receiving vehicle currently attempt to adjust to the harvester so that the receiving vehicles are filled evenly, but not overfilled. However, the operator of the harvester may unexpectedly stop the harvester (such as when the harvester head becomes clogged and needs to be cleared or for other reasons), so the operator of the receiving vehicle may not react quickly enough, and the receiving vehicle may thus be out of position relative to the harvester.

Other harvesters such as combine harvesters and sugar cane harvesters, can have similar difficulties. Also, construction vehicles can be difficult to operate while attempting to maintain alignment with a receiving vehicle.

Also, some current agricultural equipment is highly customizable by an operator. Therefore, even if the equipment is being operated properly, there may be room for improvement in the customization by the operator.

Some prior art documents describe combinations of forage harvesters and transport vehicle attempting to automatize crop transfer with giving an alert to an operator if automatic control is not possible such that the operator can continue with manual control (EP 1 977 640 A1), while DE 196 47 522 A1 describes an operator display indicating the direction in which the relative position of spout and transport vehicle should be moved in order to avoid crop losses and EP 2 311 307 A1 indicates the remaining space of a transport vehicle for filling with crop.

US 2020/0133262 A1 describes a harvesting machine with a controller and a user interface showing a set of zones within a boundary shape of a storage compartment on a crop transport vehicle on a display. The controller can present a list of target unloading areas and if useful, the controller may instruct the operator to recalibrate the alignment of the conveyor outlet and the storage compartment.

US 2018/0022559 A1 describes a loader positioning system with a sensor and visual indicators for centering a product being loaded from a loading vehicle into a receiving vehicle.

EP 2 929 773 A1 shows a combine harvester with a display showing recommendations to the operator for changing the settings of the harvester.

### SUMMARY

The present invention is defined by the claims.

### BRIEF DESCRIPTION OF THE DRAWINGS

FIG. 1 is a pictorial illustration of one example of a work machine which comprises a forage harvester filling a receiving vehicle, with the receiving vehicle in a position behind the forage harvester.
FIG. 2 is a pictorial illustration of one example of a work machine which comprises a forage harvester filling a receiving vehicle that is alongside the forage harvester.
FIG. 3 is a pictorial illustration of an operator display showing video of a filling operation.
FIG. 4 is a pictorial illustration of an operator display showing a filling operation in a scenario in which a camera is misaligned.
FIG. 5 is a block diagram of one example of an agricultural harvester.
FIG. 6 is a block diagram of one example of a tutorial condition detection system.
FIG. 7 is a block diagram of one example of an alert detection system.
FIG. 8 is a block diagram of one example of a receiving/towing vehicle.
FIG. 9 shows a flow diagram illustrating one example of detecting tutorial conditions and dynamically generating a tutorial suggestion.
FIG. 10 is one example of a tutorial suggestion operator display.
FIG. 11 is a flow diagram showing one example of the operation of an agricultural harvester detecting an alert condition and communicating the alert condition to a mobile device on a receiving vehicle, which generates an alert output.
FIG. 12 shows one example of an alert output on a mobile device.
FIG. 13 shows a block diagram of a harvester in a remote server architecture.

### DETAILED DESCRIPTION

The present discussion proceeds with respect to an agricultural harvester, but it will be appreciated that the present discussion is also applicable to construction machines or other material loading vehicles as well, such as those discussed elsewhere herein.

As discussed above, many harvesters are highly customizable by the operator. Some machines may therefore be operated in a sub-optimum way. Though the customizable settings are set by the operator to a level that meets the operators requirements, modifications to the settings may improve the performance of the machine in terms of efficiency, speed, or in other ways.

Therefore, one portion of the present description proceeds with respect to a system that stores tutorial content (such as tutorial videos), and dynamically detects tutorial selection criteria during operation of the harvester and selects tutorial content to recommend to the operator of the harvester based upon the detected tutorial selection criteria. The tutorial selection criteria may be any of a wide variety of different criteria that can be sensed by the system on the harvester and that may indicate that the customizable settings available to the operator can be improved. The detected tutorial selection criteria can be used to dynamically identify a tutorial (such as tutorial video), that may benefit the harvester. The identified tutorial can be suggested to the operator in a variety of ways. By dynamically it is meant, in one example, that the tutorial is identified during operation of the harvester based on a sensed variable that is sensed in real time or in near real time.

On some harvesters, automatic cart filling control systems have been developed to automate portions of the filling process. One such automatic fill control system uses a stereo camera on the spout of the harvester to capture an image of the receiving vehicle. An image processing system determines dimensions of the receiving vehicle and the distribution of the crop deposited inside the receiving vehicle. The system also detects crop height within the receiving vehicle, in order to automatically aim the spout toward empty spots and control the flap position to achieve a more even fill, while reducing spillage. Such systems can fill the receiving vehicle according to a fill strategy (such as front-to-back, back-to-front, etc.) that is set by the operator or that is set in other ways.

However, these systems may not always be operated in the best way. For example, if the operator controls the position of the spout to be higher or lower than is normal, then the field of view of the camera mounted on the spout may not capture the entire receiving vehicle. This can mean that the camera mounted on the spout may not capture the entire receiving vehicle. This can lead the automatic cart filling control system to be less accurate. Therefore, as one example, system described herein can detect that the camera field of view is not properly capturing the receiving vehicle and can suggest a tutorial to the operator which describes proper spout/camera position. This is just one example.

In addition, some current harvesters are provided with a machine synchronization control system. The harvester may be a combine harvester so that the spout is not moved relative to the frame during normal unloading operations. Instead, the relative position of the receiving vehicle and the combine harvester is changed in order to fill the receiving vehicle as desired. Thus, in a front-to-back fill strategy, for instance, the relative position of the receiving vehicle, relative to the combine harvester, is changed so that the spout is first filling the receiving vehicle at the front end, and then gradually fills the receiving vehicle moving rearward. In such an example, the combine harvester and receiving vehicle may have machine synchronization systems which communicate with one another. When the relative position of the two vehicles is to change, the machine synchronization system on the combine harvester can send a message to the machine synchronization system on the towing vehicle to nudge the towing vehicle slightly forward or rearward relative to the combine harvester, as desired. By way of example, the machine synchronization system on the combine harvester may receive a signal from the fill control system on the combine harvester indicating that the position in the receiving vehicle that is currently being filled is approaching its desired fill level. In that case, the machine synchronization system on the combine harvester can send a "nudge" signal to the machine synchronization system on the towing vehicle. The "nudge", once received by the machine synchronization system on the towing vehicle, causes the towing vehicle to momentarily speed up or slow down, thus nudging the position of the receiving vehicle forward or rearward, respectively, relative to the combine harvester.

However, these types of systems may not always react quickly enough when the harvester makes a sudden stop or change in direction. Also, this type of machine synchronization system is normally implemented on a subset of towing vehicles or other receiving vehicles that are used for harvesting operations. Older vehicles, for instance, may not be fitted with such a system. Therefore, the system described herein can detect an alert condition on the harvester (such as a sudden speed or direction change) and communicate the alert condition to a mobile app running on a mobile device on the receiving vehicle, so the mobile app can generate an alert output to the operator of the receiving vehicle.

Similarly, it may be that the receiving vehicle (instead of the harvester) may suddenly stop or change directions. In one example, the mobile app on the receiving vehicle senses these and other alert conditions on the receiving vehicle and sends an alert message to the control system on the harvester where an alert message is generated for the operator of the harvesters.

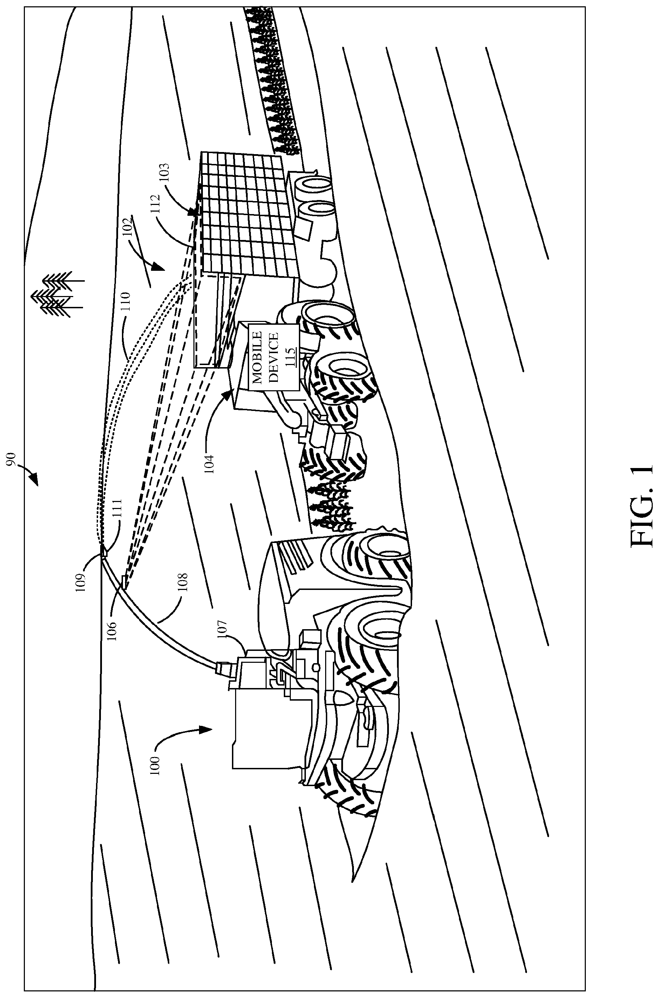

FIG. 1 is a pictorial illustration showing one example of a self-propelled forage harvester 100 (a material loading vehicle) filling a tractor-pulled grain cart (or receiving vehicle) 102. Cart 102 thus defines an interior that forms a receiving vessel 103 for receiving harvested material through a receiving area 112. In the example shown in FIG. 1, a towing vehicle (e.g., a tractor) 104, that is pulling grain cart 102, is positioned directly behind forage harvester 100 and has a mobile device 115 which may be a smart phone, tablet computer, etc. either mounted in the operator compartment of tractor 104, or carried by the operator of tractor 104. Also, in the example illustrated in FIG. 1, forage harvester 100 has a camera 106 mounted on the spout 108 through which the harvested material 110 is traveling. The spout 108 can be pivotally or rotationally mounted to a frame 107 of harvester 100. Camera 106 can be a stereo-camera or a mono-camera that captures an image (e.g., a still image or video) of the receiving area 112 of cart 102. In the example shown in FIG. 1, the receiving area 112 is defined by an upper edge of the walls of cart 102.

When harvester 100 has an automatic fill control system that includes image processing, as discussed above, the automatic fill control system can gauge the height of harvested material in cart 102, and the location of that material. The system thus automatically controls the position of spout 108 and flap 109 to direct the trajectory of material 110 into the receiving area 112 of cart 102 to obtain an even fill throughout the entire length and width of cart 102, while not overfilling cart 102. By automatically, it is meant, for example, that the operation is performed without further human involvement except, perhaps, to initiate or authorize the operation.

For example, when executing a back-to-front automatic fill strategy the automatic fill control system may attempt to move the spout and flap so the material begins landing at a first landing point in the back of vessel 103. Then, once a desired fill level is reached in the back of vessel 103, the automatic fill control system moves the spout and flap so the material begins landing just forward of the first landing point in vessel 103.

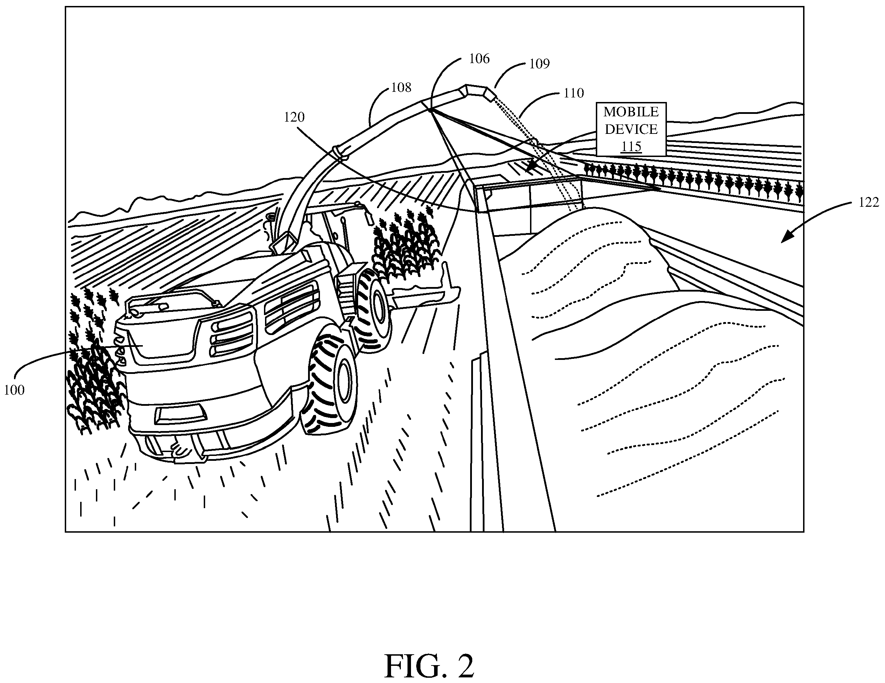

FIG. 2 is a pictorial illustration showing another example of a self-propelled forage harvester 100, this time loading a semi-trailer (or receiving vessel on a receiving vehicle) 122 in a configuration in which a semi-tractor (that also has a mobile device 115) is pulling semi-trailer 122 alongside forage harvester 100. Therefore, the spout 108 and flap 109 are positioned to unload the harvested material 110 to fill trailer 122 according to a pre-defined side-by-side fill strategy. Again, FIG. 2 shows that camera 106 can capture an image (which can include a still image or video) of semi-trailer 122. In the example illustrated in FIG. 2, the field of view of camera 106 is directed toward the receiving area 120 of trailer 122 so that image processing can be performed to identify a landing point for the harvested material in trailer 122.

In other examples, where machine 100 is a combine harvester, it may be that the spout 108 is not moved relative to the frame during normal unloading operations. Instead, the relative position of the receiving vehicle 102, 122 and the combine harvester is changed in order to fill the receiving vessel 103 as desired. Thus, if a front-to-back fill strategy is to be employed, then the relative position of the receiving vessel, relative to the combine harvester, is changed so that the spout is first filling the receiving vessel at the front end, and then gradually fills the receiving vessel moving rearward. In such an example, the towing vehicle may not have any type of machine synchronization systems, as discussed above. Thus, it can be difficult for the operators of the harvester and the towing vehicle to communicate with one another. As discussed above, the operator of the towing vehicle may not be able to react to sudden changes in the speed or direction by the harvester. Sometimes the operators use horns or radios to try to communicate with one another but this can be ambiguous and confusing, especially when more than one harvester is operating in a field.

Referring again to the examples discussed above with respect to FIGS. 1 and 2, the present discussion proceeds with respect to an example in which a mobile device 115 (such as a smartphone, a tablet computer, etc.) is accessible by the operator of the receiving vehicle (e.g., the driver of the towing vehicle or semi-tractor). The mobile device 115 may be mounted within the operator compartment of the receiving vehicle, carried by the operator, or otherwise accessible by the operator. An alert detection system on harvester 100 detects alert conditions and sends the mobile device an alert message. The mobile device 115 then surfaces an indicator to the operator of the receiving vehicle or towing vehicle indicative of the alert message.

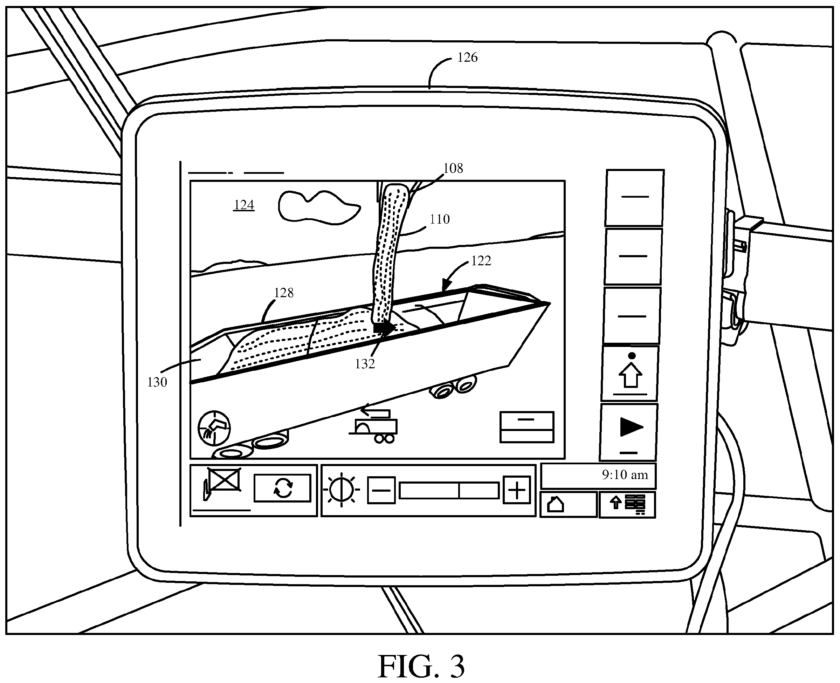

FIG. 3 is a pictorial illustration showing one example of an operator interface display 124 that can be displayed on a display mechanism 126, for the operator in an operator compartment of forage harvester 100. The display (or portion of it) can also be sent to the mobile device 115 for use by the operator of the receiving vehicle or towing vehicle (tractor 104 or the semi-tractor). The operator interface display 124 in FIG. 3 shows a view of images (or video) captured by camera 106. The image(s) show material 110 entering trailer 122. An image processing system on harvester 100 illustratively identifies the perimeter of the opening 128 in trailer 122 and also processes the image of the material 110 in trailer 122 to determine the fill height relative to opening 128. The perimeter defining opening 128 can be visually enhanced by overlaying a visual overlay over the opening 128 so that the operator can easily identify the opening 128, as it is being recognized by the image processing system.

It should also be noted that, in one example, forage harvester 100 may have an automatic fill control system (or active fill control system) which fills trailer 122 according to a fill strategy (such as a back-to-front fill strategy, front-to-back fill strategy, etc.). In that case, a current location indicator (such as indicator 132) may be displayed to show the current location where material 110 is being loaded into trailer 122 through spout 108 and the direction that spout 108 is, or should be, moving relative to trailer 122 as the filling operation continues. It can be seen in FIG. 3, for instance, that indicator 132 is an arrow pointing in the front-to-back direction. The location of arrow 132 on the representation of trailer 122 indicates the current fill position, while the direction of the arrow 132 indicates the direction that spout 108 will be moved relative to trailer 122 in executing the selected front-to-back fill strategy. Therefore, in one example, the streaming video and indicator 132 can be sent to mobile device 115 so the operator of the receiving vehicle can easily see the fill level in the trailer 122, and the direction that trailer 122 needs to move relative to the harvester in order to execute an efficient filling operation. While the indicator 132 in FIG. 2 points in the direction that spout 108 is to move relative to trailer 122, the indicator can also be reversed when shown on mobile device 115 to show the direction that the trailer 122 (and hence receiving vehicle 102) is to move relative to harvester 100. These are just some examples of how the operator interface display 124 can be generated, and other examples are also contemplated herein.

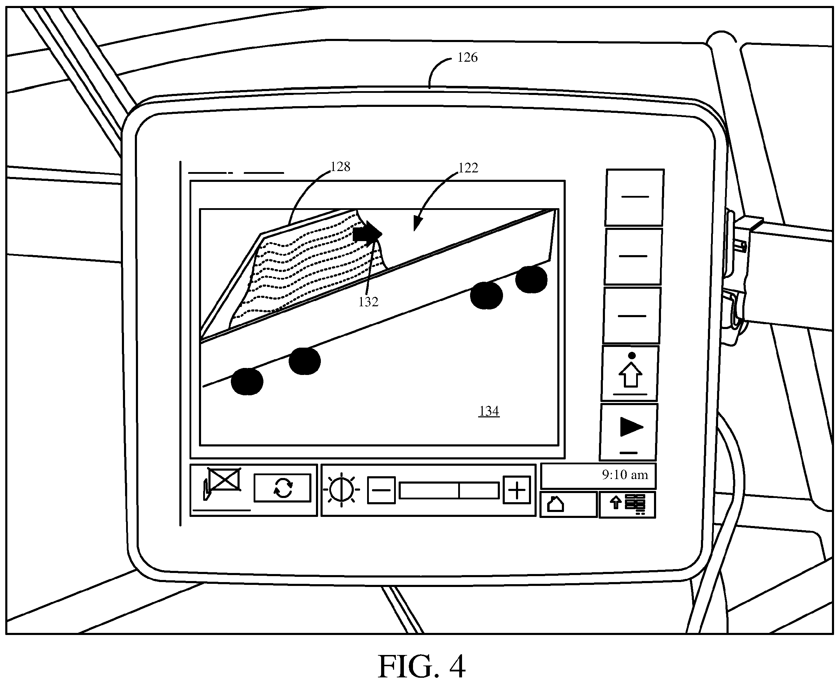

It may be that the operator of harvester 100 has a setting that is undesirable. For example, FIG. 4 is another example of an operator interface display 134 which can be generated for the operator of harvester 100 and/or sent to mobile device 115. Some items are similar to those shown in FIG. 3 and they are similarly numbered. The display 134 shows that the position of spout 108 is too high so that the field of view of the camera 106 does not capture the entire opening 128 of the trailer 122. This can cause the automatic fill control system to be less accurate. This undesirable position of the spout 108 can be detected and used to select a tutorial for recommendation to the operator of harvester 100. The tutorial may, for instance, be a tutorial video that explains how to position the spout 108 and/or the camera 106.

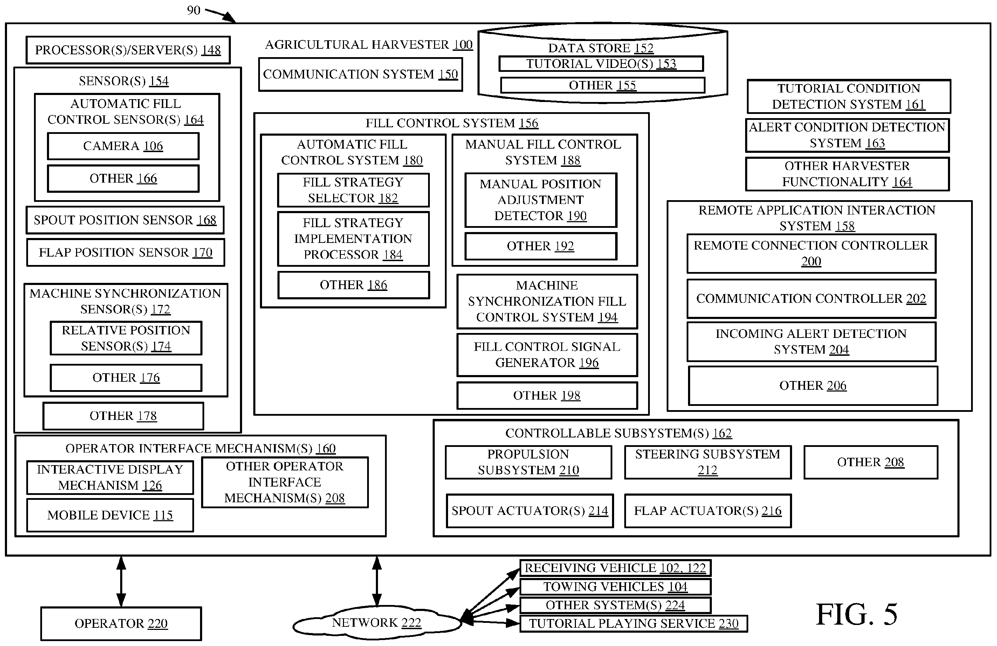

FIG. 5 is a block diagram showing one example of a material loading system (an agricultural system) 90 that includes mobile material loading machine which comprises agricultural harvester 100 in more detail. Agricultural harvester 100, in the example shown in FIG. 5, includes one or more processors or servers 148, communication system 150, data store 152 (which can include tutorials 153 and other items 155), sensors 154, fill control system 156, remote application interaction system 158, operator interface mechanisms 160, tutorial condition detection system 161, controllable subsystems 162, alert condition detection system 163, and other harvester functionality 164. Sensors 154 can include automatic fill control sensors 164 that are used by fill control system 156. Sensors 164 can include camera 106 (which may be a mono-camera, stereo-camera or another type of camera) and other sensors 166. The other sensors can include such things as Doppler sensors, RADAR sensors, other image sensors or any of a wide variety of other types of sensors. Sensors 154 can also include spout position sensor 168 and flap position sensor 170. Spout position sensor 168 illustratively senses the position of spout 108 relative to the frame of harvester 100. Sensor 168 can do this by sensing the position of an actuator that drives movement of spout 108 relative to the frame of harvester 100, or sensor 168 can be a rotary position sensor, a linear sensor, a potentiometer, a Hall Effect sensor, or any other of a wide variety of sensors that can sense the position of spout 108 relative to the frame of harvester 100. Similarly, flap position sensor 170 can be a sensor that senses the position of the flap 109. Thus, sensor 170 can be a rotary position sensor, a linear sensor, a potentiometer, a Hall Effect sensor, a sensor that senses a position of an actuator that drives movement of flap 109, or any of a wide variety of other sensors.

Sensors 154 can also include machine synchronization sensors 172. Sensors 172 can include relative position sensors 174 that sense the relative position of the harvester 100, relative to the receiving vehicle. Such sensors can include RADAR sensors, Doppler sensors, image or other optical sensors, or a wide variety of other relative position sensors. The relative position sensors 174 can also include position sensors (such as a GPS receiver, or another GNSS sensor) that senses the position of harvester 100. This can be used, in conjunction with another position sensor signal from a position sensor on the receiving vehicle, to determine the position of the two vehicles relative to one another. The machine synchronization sensors 172 can include other sensors 176, and sensors 154 can include a wide variety of other sensors 178 as well.

Fill control system 156 illustratively controls operations of various parts of harvester 100 (and possibly the towing vehicle 104) to fill the receiving vehicle 102, 122, as desired. Fill control system 156 can include automatic fill control system 180 (which, itself, can include fill strategy selector 182, fill strategy implementation processor 184, and other items 186), manual fill control system 188 (which, itself can include manual position adjustment detector 190 and other items 192), and/or machine synchronization fill control system 194. Fill control system 156 can also include fill control signal generator 196 and other items 198.

Remote application interaction system 158 can include connection controller 200, communication controller 202, incoming alert detection system 204, and other items 206. Operator interface mechanisms 160 can include interactive display mechanism 126 and a variety of other operator interface mechanisms 208. Controllable subsystems 162 can include propulsion subsystem 210, steering subsystem 212, one or more spout actuators 214, one or more flap actuators 216, and other items 218. FIG. 5 also shows that operator 220 can interact through operator interface mechanism 160 to control and manipulate agricultural harvester 100. Further, FIG. 5 shows that harvester 100 is connected over network 222 to receiving vehicle 102, 122, towing vehicle 104, tutorial playing service 230, and/or it can be connected to other systems 224. Before describing the overall operation of agricultural harvester 100 in more detail, a brief description of some of the items in agricultural harvester 100, and their operation, will first be provided.

Communication system 150 can facilitate communication among the items of harvester 100 (such as over a controller area network (CAN) bus), communication with receiving vehicles 102, 122, towing vehicle(s) 104, tutorial playing service 230, and with other systems 224 over network 222. Network 222 can be a wide area network, a local area network, a near field communication network, a Bluetooth communication network, a cellular communication network, a Wi-Fi network, or any of a variety of other networks or combinations of networks. Therefore, communication system 150 can use a controller area network (CAN) bus or other controller to facilitate communication of the items on harvester 100 with other items. Communication system 150 can also be different kinds of communication systems, depending on the particular network or networks 222 over which communication is to be made.

Operator interface mechanisms 160 can be a wide variety of different types of mechanisms. Interactive display mechanism 126 can be a display mechanism, such as that shown in FIGS. 3 and 4, or mechanism 126 can be a display mechanism on a mobile device 115, such as a tablet computer, a smartphone, etc., that is carried by the operator 220 and/or mounted in the operator compartment of harvester 100. Thus, interactive display mechanism 126 can be a touch sensitive display screen, a display screen that receives inputs through a point and click device, or other kinds of display mechanisms.

Other operator interface mechanisms 208 can include a steering wheel, levers, buttons, pedals, a microphone and speaker (where speech recognition and speech synthesis are provided), joysticks, or other mechanical, audio, visual, or haptic mechanisms that can be used to provide outputs to operator 220 or to receive inputs from operator 220.

Controllable subsystems 162 can be controlled by various different items on harvester 100. Propulsion subsystem 210 can be an engine that drives ground-engaging elements (such as wheels or tracks) through a transmission, hydraulic motors that are used to drive ground-engaging elements, electric motors, direct drive motors, or other propulsion systems that are used to drive ground-engaging elements to propel harvester 100 in the forward and rearward directions. Propulsion subsystem 110 can illustratively be controlled with a throttle to increase or decrease the speed of travel of harvester 100.

Steering subsystem 212 can be used to control the heading of harvester 100. One or more spout actuators 214 are illustratively configured to drive rotation or movement of spout 108 relative to the frame of harvester 100. Actuators 214 can be hydraulic actuators, electric actuators, pneumatic actuators, or any of a wide variety of other actuators. Similarly, one or more flap actuators 216 are used to drive the position of flap 109 relative to spout 108. The flap actuators 216 can also be hydraulic actuators, electric actuators, pneumatic actuators, or any of a wide variety of other actuators.

Fill control system 156 can use automatic fill control system 180 to perform automated fill control to automatically execute a fill strategy in filling one of the receiving vehicles 102, 122. Therefore, fill strategy selector 182 can detect a user input selecting a fill strategy, or another input selecting a fill strategy, and access data store 152 for a stored fill algorithm that can be executed to perform the selected fill strategy. For instance, where the selected fill strategy is a back-to-front strategy, the algorithm will direct filling of the receiving vehicle beginning at the back of the receiving vehicle and moving to the front of the receiving vehicle. Other fill strategies can be selected as well. Fill strategy implementation processor 184 receives inputs from the automatic fill control sensors 164, spout position sensor 168, and flap position sensor 170, and generates an output to fill control signal generator 196 based upon the inputs from the sensors to execute the desired automatic fill control strategy. Fill control signal generator 196 can generate control signals to control any of the controllable subsystems 262 (or other items) to execute the fill strategy being implemented by fill strategy implementation processor 184.

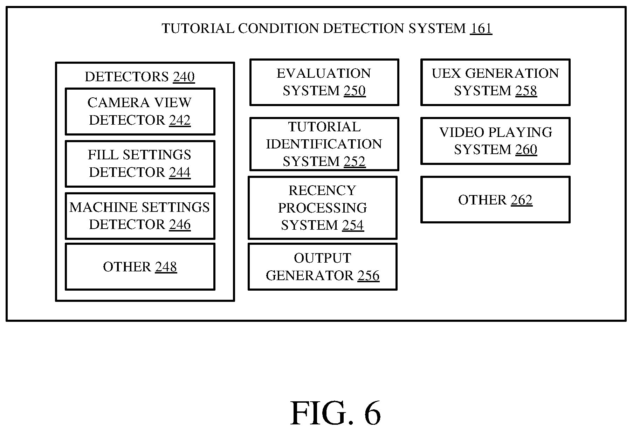

As discussed above, it may be that operator 220 has some of the settings set so that, while they are acceptable to the operator, there is room for improvement. In such a scenario, tutorial condition detection system 161 (described in greater detail below with respect to FIG. 6) detects the suboptimal settings or customizations made by operator 220 and uses those to identify a tutorial which may either be a tutorial video 153 stored in data store 152, or tutorial content that can be played by tutorial playing service 230. Tutorial condition detection system 161 then generates control signals to control operator interface mechanisms 160 to display or otherwise present a recommendation of the identified tutorial to operator 220. In one example, tutorial condition detection system 161 controls the interactive display mechanism 126 to display the tutorial recommendation. In another example, tutorial condition detection system 161 can use communication system 150 to communicate the tutorial recommendation to mobile device 115 which, in tum, generates a tutorial recommendation display for operator 220.

Also, in some examples, it may be that agricultural harvester 100 changes speed or direction quickly, or changes another operational characteristic in a way that the operator of the receiving vehicle may have difficulty reacting to. In such an example, alert condition detection system 163 detects those conditions and generates an alert output. The alert output can be provided to communication system 150 for communication to a mobile app running on the mobile device 115 in the receiving vehicles 102, 122 or towing vehicle 104. The mobile device can then generate an alert display or another alert output (such as an alert sound, a haptic output, etc.) for the operator of the receiving vehicle or towing vehicle.

Remote application interaction system 158 can receive inputs from, among other things, alert condition detection system 163 indicative of an alert condition. Remote application interaction system 158 can then generate an output indicative of the alert condition that is communicated to a mobile application on mobile device 115. Examples of mobile device 115 are described below. Suffice it to say, for now, that the mobile application on mobile device 115 can receive the output from remote application interaction system 158 and generate a display or a different output on an operator interface mechanism on mobile device 115 to communicate the alert condition to the operator of towing vehicle 104 (or a semi-tractor towing trailer 122)

More specifically, remote connection controller 200 establishes a connection with the mobile device 115. This can be done in a number of different ways. Communication controller 202 generates control signals to control communication system 150 to communicate the alert condition to the mobile device 115. The mobile device 115 on the receiving vehicle may also generate an alert message based on an alert condition detected on the receiving vehicle and send the alert message to communication system 150 on harvester. The alert message is sent to incoming alert detection system 204 that outputs the alert message to operator interface mechanism 160 for operator 220. The mobile device 115 on the receiving vehicle can also send the alert message to the mobile device 115 on harvester 100 as well.

FIG. 6 is a block diagram showing one example of a tutorial condition detection system 161. System 161 can include one or more detectors 240 which can detect various alert conditions on harvester 100. Detectors 240 can be any of the sensors 154, or processing logic that processes the signals from those sensors or from different sensors. In the example shown in FIG. 6, detectors 240 include camera view detector 242 that receives the signal from camera 106 and performs image processing to analyze the image to determine whether the field of view of camera 106 captures the entire opening of the receiving vehicle at which it is pointed. The camera view detector 242 can detect other characteristics of the image as well. Detectors 240 can include fill settings detector 244 that detects the settings to fill control system 156, such as offset values that indicate a buffer around the border of the receiving vehicle where the filling operation is to take place, the fill strategy that is selected, the flap and spout position settings, or other settings that have to do with the filling operation. Detectors 240 can also include machine settings detector 246 that detects other machine settings, such as machine speed, machine heading, header height, or any of a wide variety of other machine settings. Detectors 240 can include other detectors 248 as well.

Tutorial condition detection system 161 can also include evaluation system 250, tutorial identification system 252, recency processing system 254, output generator 256, user experience (UEX) generation system 258, video playing system 260, and other items 262. Evaluation system 250 can evaluate the outputs of detectors 240 to determine whether a tutorial selection criteria is present. For instance, if the field of view 106 is not capturing the entire opening of the receiving vehicle, as detected by camera view detector 242, evaluation system 250 may determine that this is indeed a tutorial criteria that may be used to select a tutorial for presentation or suggestion to operator 220. If the fill settings detector 244 detects that the offset values set by operator 220 are resulting in an inefficient filling operation or in other suboptimal operation, evaluation system 250 may determine that this represents a tutorial criteria as well. Evaluation system 250 may also evaluate the machine settings that are detected by machine settings detector 246 or other items detected by other detectors 248 to determine whether any tutorial suggestion criteria are present.

If evaluation system 250 determines that tutorial criteria are present, system 250 generates an output to tutorial identification system 252 that identifies one or more tutorials (e.g., tutorial videos 153 or tutorial information hosted by tutorial playing service 230) for suggestion to operator 220. Tutorial identification system 252 may be an artificial neural network, or another classifier, or another model that receives the tutorial criteria generated by evaluation system 250 as an input and identifies a tutorial as an output.

Recency processing system 254 may determine whether the tutorial identified by tutorial identification system 252 has recently been accessed or played on agricultural harvester 100, on mobile device 115, or for operator 220. For instance, it may be that the operator 220 provides identification information to harvester 100 before beginning a harvesting operation. Recency processing system 254 can use the identity of operator 220 to determine whether the tutorial identified by tutorial identification system 252 has recently been suggested to, played by, or otherwise accessed by operator 220. If the tutorial has been played by operator 220, for instance, within a predetermined threshold time period, then recency processing system 254 may delete that tutorial from the tutorials that will be suggested or recommended to operator 220.

Output generator 256 generates an output identifying the tutorials that are identified by tutorial identification system 252 that have not been recently suggested to or played by operator 220, or the operators mobile device 115, or harvester 100. The output may be a path name identifying a path to the location where the tutorial is stored, as well as a description describing the tutorials, UEX generation system 258 then generates a user experience on one or more of operator interface mechanisms 160 or on other systems that are accessible by operator 220 to suggest the tutorials and to allow operator 220 to select those tutorials for being played. UEX generation system 258 may, for instance, display an actuator, such as a thumbnail, a link, or an icon that can be actuated by operator 220 to play the tutorial. Also, in one example, UEX generation system 258 can generate an output that allows the user to delay playing of the tutorial until a later time, that is more convenient for operator 220.

Once operator 220 selects a tutorial for playing, video playing system 260 plays the tutorial video for the operator. For instance, video playing system 260 may access tutorial videos 153 from data store 152 and play the videos on an interactive display mechanism 256 or send them to mobile device 115 where they can be played. In another example, video playing system 260 can access the tutorial videos from tutorial playing service 230 and have the videos played through service 230.

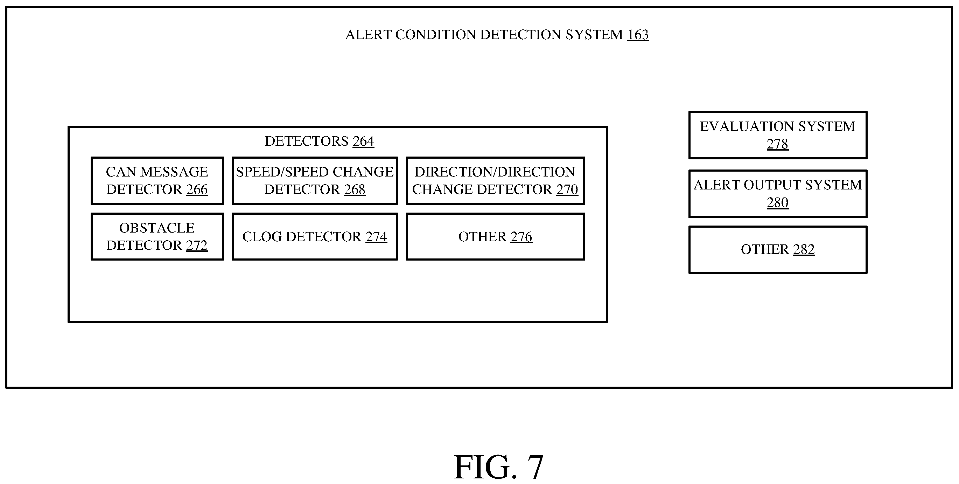

FIG. 7 is a block diagram showing one example of alert condition detection system 163. Alert condition detection system 163 includes one or more detectors 264 that detect various alert conditions on harvester 100. Similar alert condition detectors can be on the receiving vehicle as well, but they are described herein as being on harvester 100 for the sake of example. Detectors 264 can include CAN message detector 266 that detects alert conditions based upon messages on a CAN bus or similar bus on harvester 100. Detectors 264 can include a speed/speed change detector 268 that detects the speed of harvester 100 or a change in the speed of harvester 100. Detectors 264 can include direction/direction change detector 270 that detects the heading of harvester 100 or a change in the heading of harvester 100. Detectors 264 can include one or more obstacle detectors 272 that can detect obstacles that harvester 100 is approaching or that have been encountered by harvester 100. Obstacle detectors 272 can thus be one or more optical detectors, or mechanical detectors, or RADAR, or LIDAR, or other detectors that detect the presence of an obstacle. Detectors 264 can include clog detectors 274 that detect whether harvester 100 is clogged. Detectors 264 can include a wide variety of other detectors 276 that can detect alert conditions in other ways.

Speed/speed change detector 268 can detect the speed of rotation of an axel, or a transmission, or the output of an engine, or other items. Direction/direction change detector 270 can include accelerometers, a GNSS receiver, a cellular triangulation sensor, a sensor that senses a steering angle, or another sensor. Clog detector 274 can be a torque detector that detects increased torque on drive shafts, or an optical detector that detects clogging of harvester 100 or other detectors.

Alert condition detection system 163 also includes evaluation system 278, alert output system 280, and other items 282. Evaluation system 278 can evaluate one or more outputs of detectors 264 to determine whether an alert condition exists. For instance, if the detected CAN message detected by detector 266 represents an alert condition, evaluation system 278 generates an output indicating that the alert condition exists. If speed/speed change detector 268 detects a rapid acceleration or deceleration of harvester 100, evaluation system 278 may determine that this represents an alert condition. If any of the other detectors 264 generate outputs that represent an alert condition, the outputs are evaluated by evaluation system 278 indicative of a detected alert condition. Alert output system 280 can generate an output that identifies the alert, or the type of alert, that describes the alert, and that includes other information about the alert.

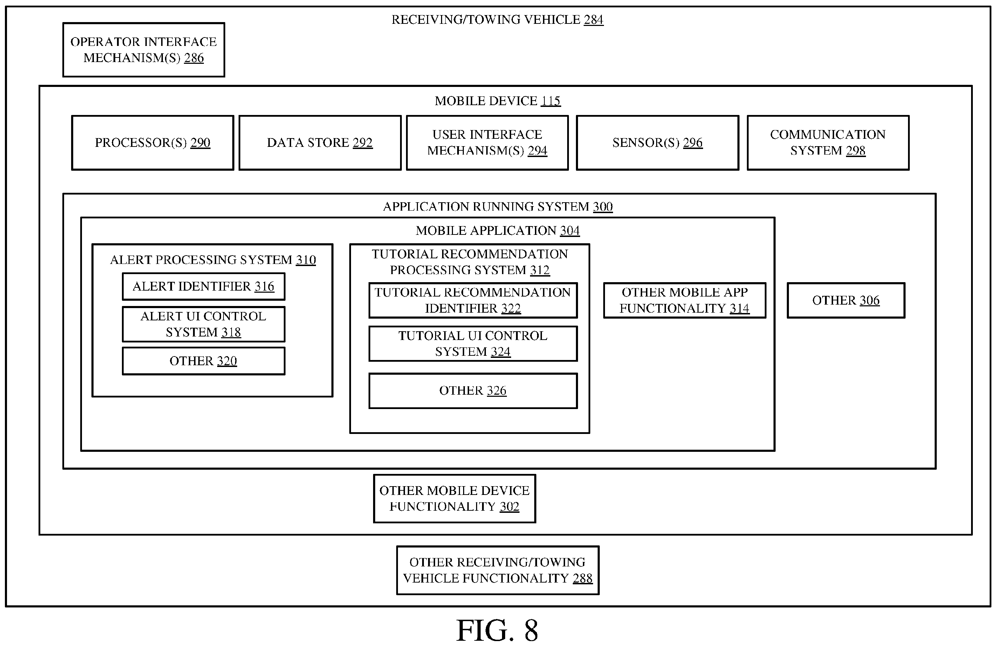

FIG. 8 is a block diagram of one example of a receiving/towing vehicle 284. It will be appreciated that receiving/towing vehicle 284 can be tractor 104, the semi-tractor pulling trailer 122, or another vehicle that can be operated by an operator local to that vehicle. Receiving/towing vehicle 284 illustratively includes one or more operator interface mechanisms 286, mobile device 115 (which may be carried by an operator of vehicle 284, mounted within an operator compartment of vehicle 284, etc.), and other receiving/towing vehicle functionality 288. In the example shown in FIG. 8, mobile device 115 illustratively includes one or more processors 290, data store or other memory 292, user interface mechanisms 294, one or more sensors 296, communication system 298, application running system 300, and other mobile device functionality 302. Application running system 300 can run a mobile application 304 and it can include other application running functionality 306.

Operator interface mechanisms 286 can include a steering wheel, pedals, joysticks, other visual, audio, haptic, or other interface mechanisms. User interface mechanisms 294 can illustratively include a display screen, a keypad, buttons, icons, a touch sensitive display screen, audio output mechanisms, a haptic output mechanism, or other interface mechanisms. Sensors 296 on mobile device 115 can include position sensors (such as a GPS receiver), accelerometers, inertial measurement units, or other sensors. The sensors can sense variables (such as change in direction, change in speed, loss of traction, etc.) indicative of an alert condition on the receiving vehicle. Communication system 234 can include a cellular communication system, a near field communication system, a Bluetooth communication system, WIFI, local or wide area network communication systems, or other communication systems or combinations of systems.

Application 304 can be downloaded by mobile device 115, or it can be installed on mobile device 115 in other ways. In the example shown in FIG. 6, mobile application 304 illustratively includes alert processing system 310, tutorial recommendation processing system 312, and other mobile app functionality 314. Alert processing system 310 can include alert identifier 316, alert UI control system 318, and other items 320. Tutorial recommendation processing system 312 can include tutorial recommendation identifier 322, tutorial UI control system 324, and other items 326. Alert processing system 310 processes alert messages that are received from harvester 100. Alert identifier 316 parses the alert message to identify the alert condition that is represented by the alert message. The identity of the alert condition may then be used by alert UI control system 318 to control user interface mechanisms 294 to generate an alert output for the operator of receiving/towing vehicle 284. For instance, alert UI control system 318 can generate a flashing message on a display screen of mobile device 115, an audible alert tone on a speaker of mobile device 115, a haptic output from mobile device 115, or another output. The output may describe the alert condition, and contain instructions for the operator of receiving/towing vehicle 284.

In an example in which a tutorial is to be displayed or played on mobile device 115, tutorial recommendation processing system 312 receives the tutorial recommendation output by tutorial condition detection system 116. Tutorial recommendation identifier 322 identifies the one or more tutorials that are to be recommended, and tutorial UI control system 324 controls user interface mechanisms 294 to display the tutorial recommendation, along with actuators that can be actuated by the operator to play or otherwise access the tutorial information. For instance, control system 324 can generate an output showing a recommended tutorial, along with an actuator, such as a thumbnail, link, or icon that can be actuated by the operator to begin playing the tutorial, to dismiss the recommendation, to delay playing of the tutorial to a later time, or to take other actions.

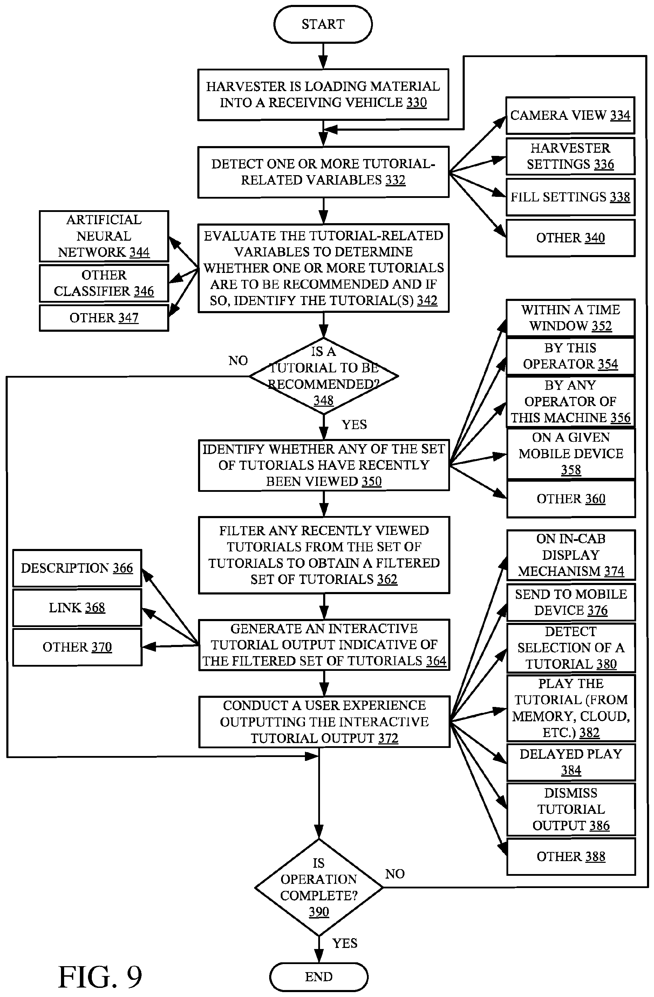

FIG. 9 is a flow diagram illustrating one example of the operation of tutorial condition detection system 161. It is first assumed that harvester 100 is loading material into a receiving vehicle. In the present discussion, it will be assumed that the receiving/towing vehicle is vehicle 284 shown in FIG. 8. Having the harvester 100 loading material into receiving vehicle 284 is indicated by block 330 in the flow diagram of FIG. 9.

Detectors 240 then detect one or more tutorial-related variables that can be used to determine whether a tutorial should be recommended to the operator. Detecting the tutorial-related variables is indicated by block 332. Tutorial-related values can be based upon a camera view 334, as detected by camera view detector 242. The tutorial-related variables can be harvester settings 336 as detected by machine settings detector 246, or fill settings 338, as detected by fill settings detector 244. The tutorial-related variables can be a wide variety of other variables 340 as well.

Evaluation system 250 then evaluates the tutorial-related variables to determine whether a tutorial is to be recommended and, if so, tutorial identification system 252 identifies the one or more tutorials to recommend, as indicated by block 342. Evaluating the tutorial-related criteria and identifying the tutorials to recommend can be performed by a single model, or multiple different models or mechanisms. The evaluation system 250 and tutorial identification system 252 can be one or more artificial neural networks 344, other classifiers 346, such as rules-based classifiers, or other classifiers or models 346.

If one or more tutorials are to be recommended, as indicated by block 348, then recency processing system 254 can determine whether any of the set of one or more tutorials have recently been viewed or otherwise accessed by the operator, as indicated by block 350. The recency processing system 254 can identify whether the tutorials have been viewed within a particular time window or time threshold, as indicated by block 352. Recency processing system 254 can determine whether the tutorials have been viewed by the present operator 354, or by any operator of this particular harvester 356, or on a given mobile device, as indicated by block 358. Recency processing system 254 can determine whether any of the set of tutorials have recently been viewed or accessed in other ways as well, as indicated by block 360.

Recency processing system 254 can then filter any of the recently viewed tutorials from the set of tutorials that are to be presented or recommended to the operator, to identify a filtered set of tutorials. Filtering the recently viewed tutorials to obtain the filtered set of tutorials is indicated by block 362 in the flow diagram of FIG. 9. Output generator 256 then generates an interactive tutorial output indicative of the filtered set of tutorials, as indicated by block 364. The output can include a description or thumbnail of each of the tutorials 366, a link or icon 368 to the tutorials, and other information 370.

UEX generation system 258 then conducts a user experience (UEX) outputting the interactive tutorial output, as indicated by block 372. The UEX can be conducted on an in-cab interactive display mechanism 126, as indicated by block 374. The UEX can be sent to a mobile device 115, as indicated by block 376. The UEX generation system 258 can detect operator interaction selecting a tutorial, as indicated by block 380, and video playing system 260 can play the tutorial, as indicated by block 382. The tutorial can be played from memory 152 on harvester 100 or from memory on the mobile device 115. The tutorial can also be played from a tutorial playing service 230. UEX generation system 258 can also detect an operator input to delay viewing of the tutorial, as indicated by block 384, or to dismiss the tutorial recommendation output, as indicated by block 386. UEX generation system 258 can generate the user experience output and detect user interactions in other ways as well, as indicated by block 388.

Until the operation of the harvester is complete, as determined at block 390, processing may revert back to block 332 where the tutorial-related variables are detected.

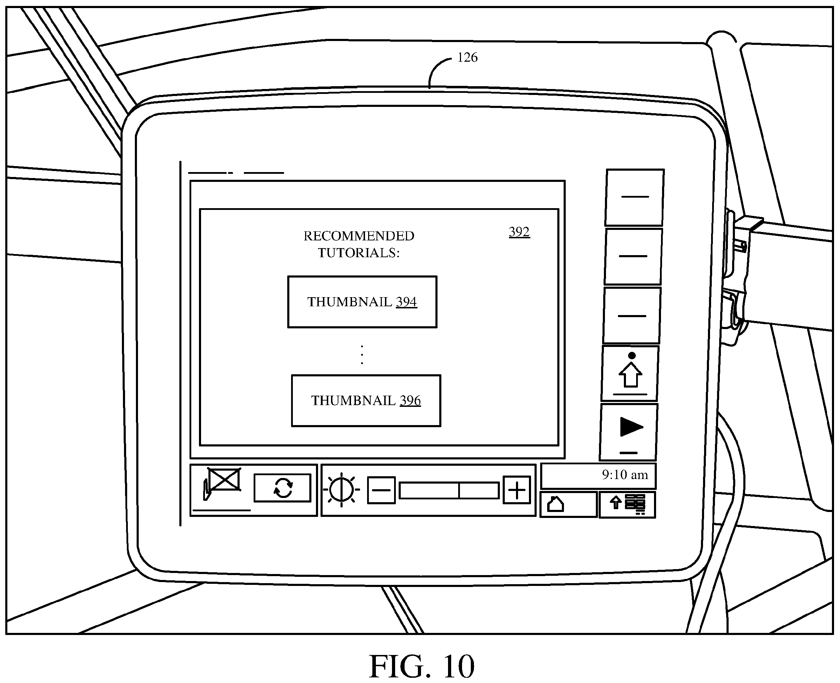

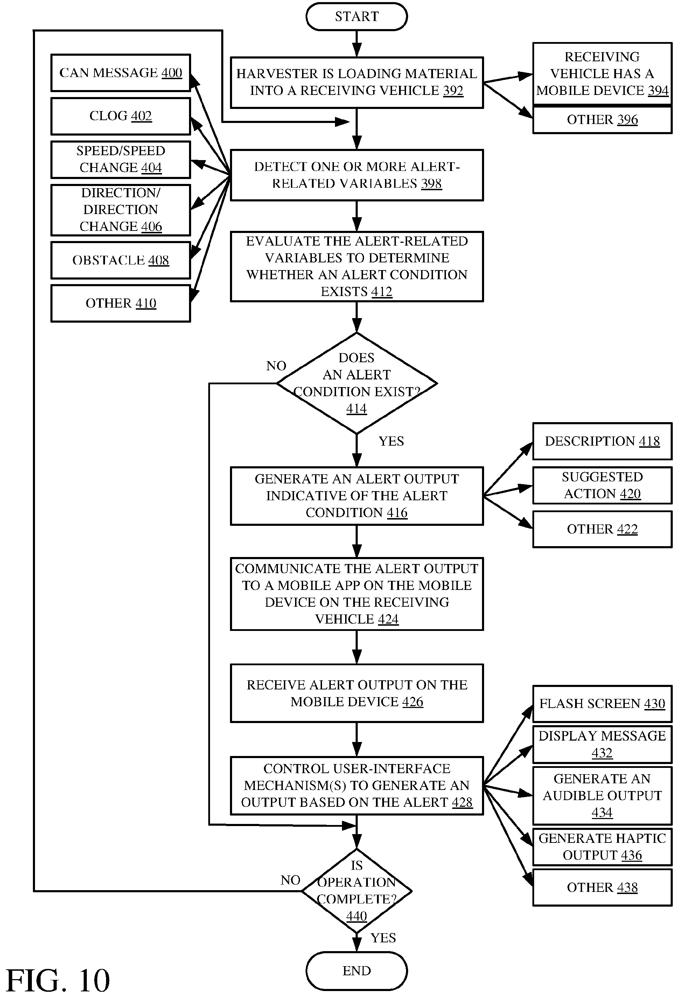

FIG. 10 shows one example, of a display mechanism 126 that can display a user interface display 392 recommending tutorials. The display 392 can include a plurality of thumbnails 394-396 that display information identifying the recommended tutorials, and that may act as a user actuatable link to the underlying tutorials. The display 392 can include more detailed information, or a wide variety of other pictorial or other information.

FIG. 11 is a flow diagram illustrating one example of the operation of alert condition detection system 163. Again, it is first assumed that harvester 102 is loading material onto a receiving vehicle 284, as indicated by block 392. In the example discussed herein, the receiving vehicle has a mobile device 115 disposed thereon, as indicated by block 394. The mobile device 115 may be held by the operator of the receiving vehicle, or mounted in an operator compartment of the receiving vehicle, or configured in other ways, as indicated by block 396.

Detectors 264 then detect one or more alert-related variables, as indicated by block 398. For instance, CAN message detector 266 may detect a CAN message 400. Clog detector 274 may detect a clog 402, speed/speed change detector 268 may detect a speed or a change in speed of harvester 100, as indicated by block 404, direction/direction change detector 270 may detect the direction or a change in direction of harvester 100, as indicated by block 406. Obstacle detector 272 may detect an obstacle 408 that has been or is about to be encountered by harvester 100, or other detectors 276 can detect other alert-related variables, as indicated by block 410.

Evaluation system 278 then evaluates the alert-related variables to determine whether an alert condition exists, as indicated by block 412. The evaluation system 278 can be an artificial neural network, a rules-based classifier, or another classifier, or mechanism for evaluating the alert-related variables to determine whether an alert condition exists.

If an alert condition exists, as indicated by block 414. Then alert output system 280 generates an alert output indicative of the alert condition, as indicated by block 416. The alert output can include a description 418 of the alert, a suggested action 420 for the operator of the receiving vehicle to take based on the alert condition, and the alert output can include a wide variety of other information 422.

Alert output system 280 can then output the alert message to communication system 150 which communicates the alert output to a mobile app 304 on mobile device 115 on the receiving vehicle as indicated by block 424.

The mobile device 115 on the receiving vehicle 284 then receives the alert output at alert processing system 310. Receiving the alert output on the mobile device 115 is indicated by block 426. Alert identifier 316 identifies the alert and alert UI control system 318 controls the user interface mechanisms 294 on the mobile device to generate an output based on the alert condition, as indicated by block 428. The output can be to flash the screen 430 of the mobile device, to display a message 432, to generate an audible output 434 or a haptic output 436, or to generate any of a wide variety of other outputs 438.

Until operation is complete, as indicated by block 440, operation returns to block 398 where one or more of the alert-related variables are again detected.

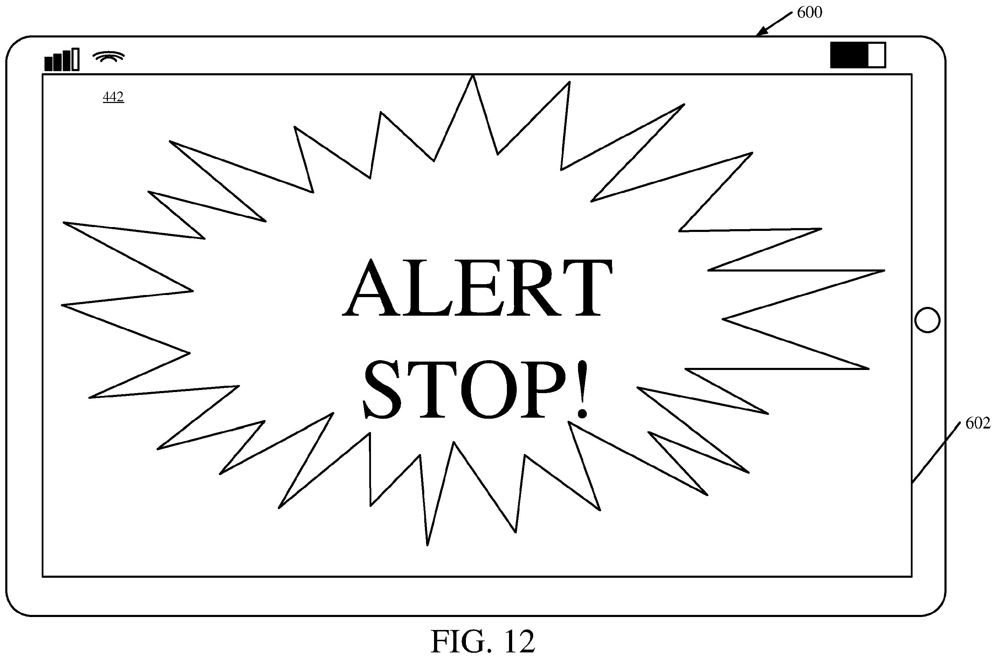

FIG. 12 shows one example of a user interface display 442 that is generated based on an alert condition on a mobile device. In the example shown in FIG. 12, the mobile device is a tablet computer 600 with a user interface display screen 602. Screen 602 can be a touch screen or a pen enabled interface that receives inputs from a touch input or from a pen or stylus. Computer 600 can also use an on-screen virtual keyboard. Computer 600 might also be attached to a keyboard or other user input device through a suitable attachment mechanism, such as a wireless link or USB port, for instance. Computer 600 can also receive and process voice or speech inputs as well.

FIG. 12 shows that the display 442 can display an alert in blinking letters. The alert can be an alphanumeric alert in large letters that blink and can also instruct the operator of the receiving vehicle 284 what to do. In the example shown in FIG. 12, the alert message instructs the operator of the receiving vehicle 284 to stop. Of course, FIG. 12 shows only one example of an alert message, and a wide variety of other alert messages can be generated as well.

It will thus be appreciated that the present system can detect an alert condition which may result in the receiving vehicle and the harvester being out of position relative to one another to establish adequate material transfer from the harvester to the receiving vehicle. The condition can be detected and transmitted to the receiving vehicle where a display or other message can be generated for the operator of the receiving vehicle. Similarly, the alert condition can be detected on the receiving vehicle and sent for display to the operator of the harvester. The present description also describes a system that can detect tutorial-related criteria which may signify that a particular tutorial should be suggested to the operator of the harvester. The tutorial-related criteria are evaluated and any tutorials are identified. An output is generated for the operator to select recommended tutorials for viewing. Thus, the tutorials are dynamically selected based upon the tutorial-related criteria that are detected during operation of the harvester.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface displays have been discussed. The displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the actuators are displayed is a touch sensitive screen, they can be actuated using touch gestures. Also, where the device that displays them has speech recognition components, they can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components and/or logic. It will be appreciated that such systems, components and/or logic can be comprised of hardware items (such as processors and associated memory, or other processing components, some of which are described below) that perform the functions associated with those systems, components and/or logic. In addition, the systems, components and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components and/or logic described above. Other structures can be used as well.

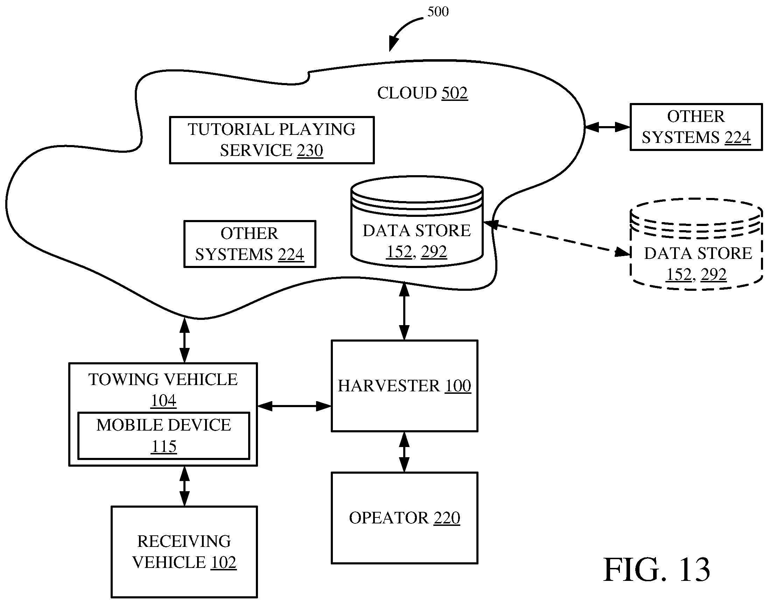

FIG. 13 is a block diagram of harvester 100 shown in FIGS. 1-12, as well as receiving vehicle 102 and towing vehicle 104 except that they communicate with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in FIGS. 1-12 as well as the corresponding data, can be stored on servers at a remote location. The computing resources in a remote server environment can be consolidated at a remote data center location or they can be dispersed. Remote server infrastructures can deliver services through shared data centers, even though the servers appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 13, some items are similar to those shown in FIGS. 1-12 and they are similarly numbered. FIG. 13 specifically shows that data stores 152, 292, tutorial playing service 230, other systems 224, and other parts of the harvester 100 and/or mobile device 115 shown in FIGS. 1-12 can be located at a remote server location 502. Therefore, harvester 100 and mobile device 115 can access those systems through remote server location 502.

FIG. 13 also depicts another example of a remote server architecture. FIG. 13 shows that it is also contemplated that some elements of FIGS. 1-12 are disposed at remote server location 502 while others are not. By way of example, data stores 152, 292 or portions of them, or other systems 224 can be disposed at a location separate from location 502, and accessed through the remote server at location 502. Regardless of where the items are located, the items can be accessed directly by harvester 100 and/or mobile device 115 through a network (such as a wide area network or a local area network), the items can be hosted at a remote site by a service, or they can be provided as a service, or accessed by a connection service that resides in a remote location. Also, data stored by harvester 100 and/or mobile device 115 can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the harvester 100 and/or mobile device 115 comes close to the fuel truck for fueling, the system automatically collects the information from the harvester 100 and/or mobile device 115 using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the harvester 100 and/or mobile device 115 until the harvester 100 and/or mobile device 115 enters a covered location. The harvester 100 and/or mobile device 115, itself, can then send the information to the main network.

It will also be noted that the elements of FIGS. 1-12 or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

## Claims

1. A material loading vehicle (100), comprising:
a material conveyance subsystem configured to convey material (110) from the material loading vehicle (100) to a receiving vehicle (102) through a spout (108),
an automatic fill control system (180) configured to automatically position the spout (108) or to change the relative position of the receiving vehicle (102) and the material loading vehicle (100);
a tutorial condition detection system (161) configured to detect, during operation of the material loading vehicle, tutorial-related criteria and to identify tutorial content based on the tutorial-related criteria; the tutorial condition detection system comprising:
a detector (240) configured to detect the tutorial-related criteria and to generate a detector signal indicative of the detected tutorial-related criteria, wherein the detector (240) comprises a fill settings detector (244) configured to detect a setting of the automatic fill control system (180) and generate, as the detector signal, a setting signal indicative of the detected setting and/or wherein the material loading vehicle (100) comprises a camera (106) that has a field of view and that is configured to capture an image of the receiving vehicle (102) used by the automatic fill control system (180) and wherein the detector (240) comprises a camera view detector (242) configured to detect an orientation of the field of view of the camera (106) and generate, as the detector signal, a camera view output signal indicative of the detected orientation of the field of view of the camera (106);
an evaluation system (250) configured to evaluate the detector signal to determine whether tutorial content is to be recommended based on the detector signal;
a tutorial identification system (252) configured to, if the evaluation system (250) determines that tutorial content is to be recommended, identify the tutorial content to be recommended based on the evaluation of the detector signal; and
an output generator (256) configured to generate an output to recommend the identified tutorial content to an operator through an operator interface mechanism;
**characterized in that** the tutorial condition detection system (161) comprises a recency processing system (254) configured to determine whether the identified tutorial content has been recommended within a recency time threshold and, if so, omit recommending the tutorial content.

2. The material loading vehicle of claim 1 wherein the tutorial condition detection system comprises:
a user experience generation system (258) configured to display an operator actuatable representation of the tutorial content and to play the tutorial content on the operator interface mechanism based on operator actuation of the operator actuatable representation of the tutorial content.

3. The material loading vehicle of claim1 wherein the identified tutorial content comprises video tutorial content and wherein the tutorial condition detection system comprises:
a video playing system (260) configured to play the video tutorial content.

4. The material loading vehicle of claim 1 wherein the material loading vehicle includes operator interface mechanisms configured to receive machine settings configured to control the material loading vehicle and wherein the detector comprises:
a machine settings detector (246) configured to detect the machine settings and generate, as the detector signal, a machine setting signal indicative of the detected machine setting.

5. The material loading vehicle of claim 1 and further comprising:
an alert condition detection system (163) configured to sense an alert condition indicative of a speed change or a direction change of the material loading vehicle and generate an alert output signal indicative of the sensed alert condition; and
a communication system (150) that communicates the alert output signal to a mobile application running on a mobile device in the receiving vehicle.

## Patentansprüche

1. Materialverladefahrzeug (100), das Folgendes umfasst:
ein Untersystem zur Materialförderung, das konfiguriert ist, Material (110) von dem Materialverladefahrzeug (100) durch einen Auslauf (108) zu einem Aufnahmefahrzeug (102) zu fördern,
ein automatisches Befüllungssteuerungssystem (180), das konfiguriert ist, den Auslauf (108) automatisch zu positionieren oder die relative Position des Aufnahmefahrzeugs (102) und des Materialverladefahrzeugs (100) zu ändern;
ein System (161) zur Erkennung von Lernbedingungen, das konfiguriert ist, während des Betriebs des Materialverladefahrzeugs auf Lernen bezogene Kriterien zu detektieren und Lerninhalte basierend auf den auf Lernen bezogenen Kriterien zu identifizieren; wobei das System zur Erkennung von Lernbedingungen Folgendes umfasst:
einen Detektor (240), der konfiguriert ist, die auf Lernen bezogenen Kriterien zu detektieren und ein Detektorsignal zu erzeugen, das die detektierten auf Lernen bezogenen Kriterien anzeigt,
wobei der Detektor (240) einen Detektor (244) für Befüllungseinstellungen umfasst, der konfiguriert ist, eine Einstellung des automatischen Befüllungssteuerungssystems (180) zu detektieren, und als das Detektorsignal ein Einstellungssignal zu erzeugen, das die detektierte Einstellung anzeigt, und/oder wobei das Materialverladefahrzeug (100) eine Kamera (106) umfasst, die ein Sichtfeld aufweist und die konfiguriert ist, ein Bild des Aufnahmefahrzeugs (102) aufzunehmen, das von dem automatischen Befüllungssteuerungssystem (180) verwendet wird, und wobei der Detektor (240) einen Kamerasichtdetektor (242) umfasst, der konfiguriert ist, eine Orientierung des Sichtfelds der Kamera (106) zu detektieren und als das Detektorsignal ein Kamerasicht-Ausgabesignal zu erzeugen, das die detektierte Orientierung des Sichtfelds der Kamera (106) anzeigt;
ein Bewertungssystem (250), das konfiguriert ist, das Detektorsignal zu bewerten, um basierend auf dem Detektorsignal zu bestimmen, ob der Lerninhalt empfohlen werden soll;
ein Lern-Identifizierungssystem (252), das konfiguriert ist, dann, wenn das Bewertungssystem (250) bestimmt, dass der Lerninhalt empfohlen werden soll, den Lerninhalt, der empfohlen werden soll, basierend auf der Bewertung des Detektorsignals zu identifizieren; und
einen Ausgabegenerator (256), der konfiguriert ist, eine Ausgabe zu erzeugen, um den identifizierten Lerninhalt durch einen Bedienerschnittstellenmechanismus einem Bediener zu empfehlen;
**dadurch gekennzeichnet, dass** das System (161) zur Erkennung von Lernbedingungen ein Aktualitätsverarbeitungssystem (254) umfasst, das konfiguriert ist, zu bestimmen, ob der identifizierte Lerninhalt innerhalb eines Aktualitätszeitschwellenwerts empfohlen worden ist, und wenn dies der Fall ist, das Empfehlen des Lerninhalts zu unterlassen.

2. Materialverladefahrzeug nach Anspruch 1, wobei das System zur Erkennung von Lernbedingungen Folgendes umfasst:
ein System (258) zur Erzeugung von Benutzererfahrung, das konfiguriert ist, eine Darstellung des Lerninhalts, die von dem Bediener betätigt werden kann, anzuzeigen und den Lerninhalt basierend auf der Betätigung der Darstellung des Lerninhalts, die von dem Bediener betätigt werden kann, durch den Bediener auf dem Bedienerschnittstellenmechanismus abzuspielen.

3. Materialverladefahrzeug nach Anspruch 1, wobei der identifizierte Lerninhalt Video-Lerninhalt umfasst und wobei das System zur Erkennung von Lernbedingungen Folgendes umfasst:
ein System (260) zum Abspielen von Videos, das konfiguriert ist, den Video-Lerninhalt abzuspielen.

4. Materialverladefahrzeug nach Anspruch 1, wobei das Materialverladefahrzeug Bedienerschnittstellenmechanismen enthält, die konfiguriert sind, Maschineneinstellungen zu empfangen, die konfiguriert sind, das Materialverladefahrzeug zu steuern, und wobei der Detektor Folgendes umfasst:
einen Maschineneinstellungsdetektor (246), der konfiguriert ist, die Maschineneinstellungen zu detektieren und als das Detektorsignal ein Maschineneinstellungssignal zu erzeugen, das die detektierte Maschineneinstellung anzeigt.

5. Materialverladefahrzeug nach Anspruch 1, das ferner Folgendes umfasst:
ein System (163) zur Erkennung von Alarmbedingungen, das konfiguriert ist, eine Alarmbedingung zu erfassen, die eine Geschwindigkeitsänderung oder eine Richtungsänderung des Materialverladefahrzeugs anzeigt, und ein Alarmausgabesignal zu erzeugen, das die erfasste Alarmbedingung anzeigt; und
ein Kommunikationssystem (150), das das Alarmausgabesignal einer mobilen Anwendung übermittelt, die auf einer mobilen Vorrichtung in dem Aufnahmefahrzeug läuft.

## Revendications

1. Véhicule de chargement de matériaux (100) comprenant :
un sous-système de transport de matériaux configuré pour transporter des matériaux (110) du véhicule de chargement de matériaux (100) à un véhicule de réception (102) par l'intermédiaire d'une goulotte (108),
un système de contrôle automatique du remplissage (180) configuré pour positionner automatiquement la goulotte (108) ou pour modifier la position relative du véhicule de réception (102) et du véhicule de chargement de matériaux (100) ;
un système de détection de condition de tutoriel (161) configuré pour détecter, pendant le fonctionnement du véhicule de chargement de matériaux, des critères liés au tutoriel et pour identifier le contenu du tutoriel en fonction des critères liés au tutoriel ; le système de détection de condition de tutoriel comprenant :
un détecteur (240) configuré pour détecter les critères liés au tutoriel et pour générer un signal de détecteur indicatif des critères liés au tutoriel détectés,
où le détecteur (240) comprend un détecteur de réglages de remplissage (244) configuré pour détecter un réglage du système de commande de remplissage automatique (180) et générer, en tant que signal de détecteur, un signal de réglage indicatif du réglage détecté et/ou où le véhicule de chargement de matériaux (100) comprend une caméra (106) qui a un certain champ de vision et qui est configurée pour capturer une image du véhicule de réception (102) utilisé par le système de commande de remplissage automatique (180) et où le détecteur (240) comprend un détecteur de vue de caméra (242) configuré pour détecter une orientation du champ de vision de la caméra (106 ) et générer, en tant que signal de détecteur, un signal de sortie de vue de caméra indicatif de l'orientation détectée du champ de vision de la caméra (106) ;
un système d'évaluation (250) configuré pour évaluer le signal du détecteur afin de déterminer si un contenu de tutoriel doit être recommandé sur la base du signal du détecteur ;
un système d'identification de tutoriel (252) configuré pour, si le système d'évaluation (250) détermine qu'un contenu de tutoriel doit être recommandé, identifier le contenu de tutoriel à recommander sur la base de l'évaluation du signal du détecteur ; et
un générateur de sortie (256) configuré pour générer une sortie afin de recommander le contenu de tutoriel identifié à un opérateur par l'intermédiaire d'un mécanisme d'interface opérateur ;
**caractérisé en ce que** le système de détection de condition de tutoriel (161) comprend un système de traitement récent (254) configuré pour déterminer si le contenu de tutoriel identifié a été recommandé dans un délai récent et, si c'est le cas, omettre de recommander le contenu de tutoriel.

2. Véhicule de chargement de matériaux selon la revendication 1, dans lequel le système de détection de condition de tutoriel comprend :
un système de génération d'expérience utilisateur (258) configuré pour afficher une représentation actionnable par l'opérateur du contenu du tutoriel et pour lire le contenu du tutoriel sur le mécanisme d'interface opérateur sur la base de l'actionnement par l'opérateur de la représentation actionnable par l'opérateur du contenu du tutoriel.

3. Véhicule de chargement de matériaux selon la revendication 1, dans lequel le contenu du tutoriel identifié comprend un contenu de tutoriel vidéo et dans lequel le système de détection de condition de tutoriel comprend :
un système de lecture vidéo (260) configuré pour lire le contenu du tutoriel vidéo.

4. Véhicule de chargement de matériaux selon la revendication 1, dans lequel le véhicule de chargement de matériaux comprend des mécanismes d'interface opérateur configurés pour recevoir des réglages de machine configurés pour commander le véhicule de chargement de matériaux, et dans lequel le détecteur comprend :
un détecteur de réglages de machine (246) configuré pour détecter les réglages de machine et générer, en tant que signal de détecteur, un signal de réglage de machine indicatif du réglage de machine détecté.

5. Véhicule de chargement de matériaux selon la revendication 1 et comprenant en outre :
un système de détection de condition d'alerte (163) configuré pour détecter une condition d'alerte indicative d'un changement de vitesse ou d'un changement de direction du véhicule de chargement de matériaux, et générer un signal de sortie d'alerte indicatif de la condition d'alerte détectée ; et
un système de communication (150) qui communique le signal de sortie d'alerte à une application mobile fonctionnant sur un dispositif mobile dans le véhicule de réception.
